**Europäisches Patentamt**

**European Patent Office**

**Office européen des brevets**

(19)

(11) Veröffentlichungsnummer : **0 377 598 B1**

(12) # EUROPÄISCHE PATENTSCHRIFT

(45) Veröffentlichungstag der Patentschrift :
**05.06.91 Patentblatt 91/23**

(51) Int. Cl.$^5$ : **B60J 11/00**

(21) Anmeldenummer : **88907110.6**

(22) Anmeldetag : **30.07.88**

(86) Internationale Anmeldenummer :
**PCT/DE88/00473**

(87) Internationale Veröffentlichungsnummer :
**WO 89/00930 09.02.89 Gazette 89/04**

(54) **SCHEIBENABDECKVORRICHTUNG FÜR KRAFTFAHRZEUGE.**

(30) Priorität : **04.08.87 DE 8710661 U**

(43) Veröffentlichungstag der Anmeldung :
**18.07.90 Patentblatt 90/29**

(45) Bekanntmachung des Hinweises auf die
Patenterteilung :
**05.06.91 Patentblatt 91/23**

(84) Benannte Vertragsstaaten :
**AT BE CH DE FR GB IT LI LU NL SE**

(56) Entgegenhaltungen :
**BE-A- 892 621**

(56) Entgegenhaltungen :
**DE-B- 1 199 165**
**DE-U- 8 708 186**
**US-A- 2 489 901**
**US-A- 4 727 920**

(73) Patentinhaber : **Lehnhoff, Kurt Dipl.-Ing.,**
**Stettiner Strasse 29**
**W-6380 Bad Homburg (DE)**

(72) Erfinder : **Lehnhoff, Kurt Dipl.-Ing.,**
**Stettiner Strasse 29**
**W-6380 Bad Homburg (DE)**

(74) Vertreter : **Schieferdecker, Lutz, Dipl.-Ing.**
**Herrnstrasse 37**
**W-6050 Offenbach am Main (DE)**

EP 0 377 598 B1

## Beschreibung

Die Erfindung betrifft eine Scheibenabdeckung für die Windschutzscheibe von Kraftfahrzeugen mit einem an die Größe und die Abmessung der Windschutzscheibe angepaßten, flachen sowie faltbaren Teil aus Kunststoff.

Eine Scheibenabdeckung der genannten Art ist aus der DE-B-1 199 165 bekannt. Bei dieser Scheibenabdeckung handelt es sich um ein Warnelement für Verkehrszwecke, das auch im auseinandergeklappten Zustand als Witterungsschutzmatte gegen Einfrieren, Reifbildung oder sonstige Witterungsunbilden verwendet werden kann. Das Element besteht aus mehreren, aneinander angelenkten Flächenstücken, die jeweils für sich gleichseitige Dreiecke sind und im auseinandergeklappten Zustand eine trapezförmige Fläche einnehmen. Faltstege sind als gelenkige Verbindung zwischen den einzelnen, plattenförmigen Flächenstücken vorgesehen und Steck- oder Saugvorrichtungen dienen zur Befestigung des Elementes an der Windschutzscheibe. Die einzelnen, plattenförmigen Flächenstücke sind steif und verhältnismässig massiv, so daß sie auch ein nicht unbeachtliches Eigengewicht besitzen. Die Handhabung diese Elementes ist daher nicht einfach.

Der Erfindung liegt die Aufgabe zugrunde, eine Scheibenabdeckung zu schaffen, die leicht zu handhaben ist, an der Windschutzscheibe nicht anfriert, sich an die Wölbung der Windschutzscheibe gut anpasst und kostengünstig hergestellt werden kann.

Zur Lösung dieser Aufgabe sieht die Erfindung vor, daß das flache, faltbare Teil aus Kunststoff eine dünne Doppelstegplatte ist.

Ein solches Teil ist ausserordentlich leicht und besitzt eine vergleichsweise hohe Eigensteifigkeit bei ausreichender Biegsamkeit zur Anpassung an die Wölbung einer Windschutzscheibe. Es lässt sich daher mühelos handhaben.

Als Doppelstegplatte besteht die Scheibenabdeckung aus zwei parallel zueinander angeordneten Platten, die durch eine Vielzahl parallel verlaufender Stege einstückig miteinander verbunden sind. In den Kammern zwischen den Stegen bilden sich Luftpolster, die der Scheibenabdeckung günstige thermodynamische Eigenschaften verleihen. Die Luftpolster beeinflussen den Wärmedurchgang. Sie dämmen die Abstrahlung von Wärme im Winter nach außen und hemmen im Sommer als Sonnenschutz bei einem abgestellten Fahrzeug den Wärmeeintritt in sein Inneres.

Weitere Ausführungsformen der Erfindung sind in den abhängigen Ansprüchen angegeben.

Die Erfindung wird nachstehend anhand eines Ausführungsbeispieles, das in der Zeichnung dargestellt ist, näher beschrieben. Dabei zeigen :

Abb. 1 eine Ansicht der Scheibenabdeckung ;

Abb. 2 eine Draufsicht und

Abb. 3 eine Draufsicht ähnlich wie in Abb. 2, jedoch in einer Einbauposition.

Eine Scheibenabdeckung für die Windschutzscheibe von Kraftfahrzeugen besteht gemäß dem in den Abbildungen dargestellten Ausführungsbeispiel aus einer an die Größe und an die Abmessungen der Windschutzscheibe angepaßten, faltbaren sowie flachen bzw. dünnen Doppelstegplatte 1. An ihren Rändern kann die Doppelstegplatte 1 verschweißt sein.

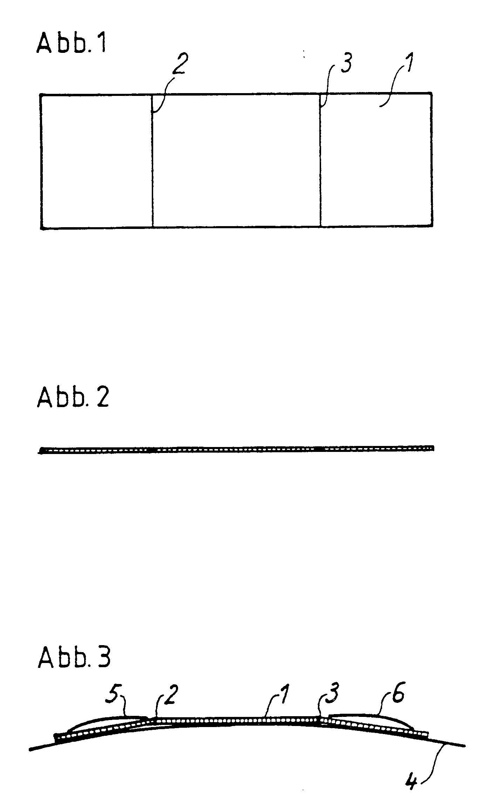

Wie vor allem aus den Abbildungen 1 und 3 hervorgeht, weist die Doppelstegplatte vorzugsweise zwei Falzungen bzw. Falzlinien 2, 3 auf, die etwa auf einem Drittel ihrer Länge angeordnet sind. Hierdurch lässt sich die Doppelstegplatte 1 vorteilhaft an die Wölbung einer Windschutzscheibe 4 anpassen und ferner dienen die Falzlinien 2, 3 dazu, dass sich die Doppelstegplatte leicht und platzsparend zusammenlegen lässt.

Als Werkstoff für die Doppelstegplatte 1 dient ein Kunststoff, der ihr zusammen mit den vorgesehenen Abmessungen sowohl Biegsamkeit als auch ausreichende Eigenstabiltät verleiht. Diese Eigenstabilität ist in einem solchen Maße vorhanden, daß die Doppelstegplatte 1 frei auskragend von einem neben dem Fahrzeug stehenden Benutzer auf die Windschutzscheibe aufgelegt und unter die angehobenen Scheibenwischerblätter geschoben werden kann.

Zur Befestigung wird die Doppelstegplatte nicht nur hinter die Scheibenwischerblätter 5, 6 geklemmt, sie kann zusätzlich auch mit nicht dargestellten kurzen Leinen am Außenspiegel oder an der Tür gesichert werden.

## Ansprüche

1. Scheibenabdeckung für die Windschutzscheibe von Kraftfahrzeugen mit einem an die Größe und die Abmessung der Windschutzscheibe angepaßten, flachen sowie faltbaren Teil aus Kunststoff, dadurch gekennzeichnet, daß das flache, faltbare Teil aus Kunststoff eine dünne Doppelstegplatte (1) ist.

2. Scheibenabdeckung nach Anspruch 1, dadurch gekennzeichnet, daß die Doppelstegplatte (1) mindestens zwei quer gerichtete Falzungen (2, 3) zum Zusammenlegen aufweist.

3. Scheibenabdeckung nach Anspruch 1 und 2, dadurch gekennzeichnet, daß die Doppelstegplatte (1) an ihren Rändern verschweißt ist.

4. Scheibenabdeckung nach Anspruch 1, dadurch gekennzeichnet, daß die Doppelstegplatte (1) aus einem ausreichend eigenstabilen sowie biegsamen Kunststoff besteht.

## Claims

1. Cover for the windscreen of motor vehicles with a flat as well as foldable component part made of plastics, adapted to the size and dimension of the windscreen, characterized by a flat, foldable plastic part, which is a double-webbed plate (1).

2. Windscreen cover in accordance with claim 1, characterized by a double-webbed plate (1) which shows at least two transversally running grooves (2, 3) for folding.

3. Windscreen cover in accordance with claim 1 and 2, characterized by a double-webbed plate (1) with welded edges.

4. Windscreen cover in accordance with claim 1, characterized by a double-webbed plate (1) made of flexible plastic with sufficient stability.


## Revendications

1. Dispositif de recouvrement du pare-brise d'un véhicule à moteur, comprenant une partie plane en matière synthétique, pouvant être pliée, adaptée à la grandeur et à la dimension du pare-brise, caractérisé en ce que la partie plane, pouvant être pliée, en matière synthétique est une plaque double alvéolaire (1) mince.

2. Dispositif de recouvrement suivant la revendication 1, caractérisé en ce que la plaque double alvéolaire (1) présente au moins deux lignes de pliage transversales (2, 3) destinées à replier le dispositif de recouvrement.

3. Dispositif de recouvrement suivant les revendications 1 et 2, caractérisé en ce que la plaque double alvéolaire (1) est soudée sur ses bords.

4. Dispositif de recouvrement suivant la revendication 1, caractérisé en ce que la plaque double alvéolaire (1) est réalisée en une matière synthétique flexible ayant une stabilité propre suffisante.

Abb.1

Abb. 2

Abb. 3